Europäisches Patentamt

European Patent Office

Office européen des brevets

(11) Veröffentlichungsnummer: **0 320 786 B1**

# (12) EUROPÄISCHE PATENTSCHRIFT

(45) Veröffentlichungstag der Patentschrift:
23.10.91 Patentblatt 91/43

(51) Int. Cl.$^5$: **B27K 3/52**

(21) Anmeldenummer: **88120491.1**

(22) Anmeldetag: **08.12.88**

---

(54) **Holzschutzmittel.**

---

(30) Priorität: **17.12.87 DE 3742834**

(43) Veröffentlichungstag der Anmeldung:
**21.06.89 Patentblatt 89/25**

(45) Bekanntmachung des Hinweises auf die
Patenterteilung:
**23.10.91 Patentblatt 91/43**

(84) Benannte Vertragsstaaten:
**AT BE CH DE ES FR GB GR IT LI NL SE**

(56) Entgegenhaltungen:
**EP-A- 0 234 461
AU-A- 519 146
US-A- 3 945 835
CHEMICAL ABSTRACTS, Band 71, Nr. 17, 27
Oktober 1969, Columbus, OH (US); S. 272, Nr.
80206a
WO 85/4668**

(73) Patentinhaber: **Dr. Wolman GmbH
Dr.-Wolman-Strasse 31-33
W-7573 Sinzheim (DE)**

(72) Erfinder: **Goettsche, Reimer, Dr.
Waldstr. 27
W-7570 Baden-Baden 19 (DE)**
Erfinder: **Marx, Hans-Norbert
Tuerkenlouisstr. 5
W-7580 Buehl-Vimbuch (DE)**

(74) Vertreter: **Schweiss, Werner, Dr. et al
BASF Aktiengesellschaft Patentabteilung
Carl-Bosch-Strasse 38
W-6700 Ludwigshafen (DE)**

---

EP 0 320 786 B1

## Beschreibung

Die vorliegende Erfindung betrifft ein Holzschutzmittel z.B. in Form einer wäßrigen Lösung, das eine Zink-Verbindung, außer Zinksilicofluorid, $ZnSiF_6$, eine aliphatische Carbonsäure, die mit Zink ein wasserunlösliches Salz bildet, ein Polyamin und ggf. eine komplexbildende Carbonsäure enthält.

Holzschutzmittel auf Basis von Alkanolaminen, Kupferverbindungen und aliphatischen Monocarbonsäuren ($C_6$-$C_{18}$) sind bekannt (Australische Patentschrift 519146). Die kupferhaltigen Formulierungen verfärben jedoch das Holz blau-grünlich. Entsprechende Holzschutzmittel auf Basis von Zinkverbindungen färben nicht, sie sind aber in wäßrigen Lösungen nicht stabil, sie fallen aus. Es ist ferner bekannt, Mischungen aus Kupfer-di-(N-cyclohexyldiazoniumdioxy), Polyamin und komplexbildender Carbonsäure (z.B. Milchsäure, Weinsäure, Nitrilotriessigsäure, Ethylendiaminotetraessigsäure) als Holzschutzmittel zu verwenden (EP-A-0234461). Es ist außerdem bekannt, Zinksilicofluorid in Holzschutzmittelmischungen zu verwenden (C.A. 71, 80206a (1969)).

Es wurde nun gefunden, daß die obengenannten Nachteile nicht auftreten bei Holzschutzmitteln auf Basis von Zinkverbindungen, außer Zinksilicofluorid, $ZnSiF_6$, aliphatischen Carbonsäuren, die mit Zink ein wasserunlösliches Salz bilden, Polyaminen und ggf. einer komplexbildenen Carbonsäure. Als Polyamine sind hier insbesondere geeignet z.B. aliphatische Polyamine, Alkylenpolyamine mit 3 bis 9 C-Atomen und 2 bis 4 N-Atomen, 1,3-Diaminopropan, Dipropylentriamin (3,3'-Diaminodipropylamin), Ethylendiamin, Diethylentriamin (2,2'-Diaminodiethylamin), Aminoethylethanolamin.

Als aliphatische Carbonsäuren können z.B. Monocarbonsäuren (mit $C_5$-$C_{20}$) wie Hexansäure, Heptansäure, Octansäure, Nonansäure, Decansäure, 2-Ethylpentansäure, 2-Ethylhexansäure, 2-Ethylheptansäure, Isooctansäure, Isononansäure, Isodecansäure, Versaticsäuren (stark verzweigte Monocarbonsäuren), Dicarbonsäuren ($C_5$-$C_{20}$) z.B. Decandicarbonsäure verwendet werden. Geeignet sind auch Polycarbonsäuren wie Polyacrylsäuren.

Diese Säuren bilden mit Zink wasserunlösliche Salze, die durch die komplexbildende Wirkung der obengenannten Amine im alkalischen Medium gelöst werden. Die Komplexbildung kann manchmal durch Zugabe von komplexbildenden Carbonsäuren, wie z.B. Nitrilotriessigsäure oder Hydroxycarbonsäuren ($C_3$-$C_6$), Milchsäure, Weinsäure, Zitronensäure, verbessert werden.

Als Zinkverbindungen können wasserlösliche oder wasserunlösliche Verbindungen (z.B. Zinkmetall, Zinksulfat, Zinkhydroxid, Zinkcarbonat, Zinkoxid, Zinkacetat, Zinkborat, Zinkfluorid, Zinkfluoroborat) außer Zinksilicofluorid, $ZnSiF_6$, verwendet werden.

Die wasserverdünnbaren Mittel enthalten — in konzentrierter Form — das Zink berechnet als Element, in einer Menge von 1 bis 15 Gew.%.

Es können zusätzlich diffusionsfähige Anionen wie z.B. Borate, Fluoride, Borfluoride enthalten sein, die nach der Imprägnierung des Holzes durch ihre Diffusion einer Imprägnierung nicht zugängliche Bereiche, wie das Kernholz, schützen.

Die Wirkung des Holzschutzmittels kann z.B. durch Salze des N-Cyclohexyldioxydiazeniumoxids z.B. das Zinksalz oder das Kaliumsalz ergänzt werden. Auch die Kombination mit quartären Ammoniumverbindungen ist hierfür geeignet.

Eine quartäre Ammoniumverbindung ist z.B. eine Verbindung entsprechend der allgemeinen Formel ($R^1$ $R^2$ $R^3$ $R^4N$) + Z—, wobei

$R^1$  einen Alkylrest mit 8 bis 20 Kohlenstoffatomen, insbesondere einen Alkylrest mit 12 bis 20 Kohlenstoffatomen oder einen Benzylrest bedeutet, der gegebenenfalls durch $C_1$-$C_{20}$-Alkyl oder Halogen substituiert ist,

$R^2$  $C_1$-$C_6$-Alkyl, $C_3$-$C_9$-Alkoxyalkyl

$R^3$  $C_1$-$C_6$-Alkyl, $C_1$-$C_{14}$-Alkoxy,

$R^4$  $C_1$-$C_{20}$-Alkyl

bedeuten oder je zwei Reste $R^1$ bis $R^4$ zusammen mit dem Stickstoffatom einen heterocyclischen Rest bilden, der 4 bis 5 C-Atome, 1 bis 2 N-Atome und eine, zwei oder drei Doppelbindungen enthält, wobei die Kohlenstoffatome gegebenenfalls durch $C_1$-$C_4$-Alkyl oder Halogen substituiert sind, und Z einen Säurerest bedeutet.

Geeignete Konzentrate enthalten z.B. (Gew.%)

| | |
|---|---|
| 5-40% | insbesondere 6-12% Zink-Verbindung |
| 10-40% | insbesondere 20-37% Carbonsäure/Polycarbonsäure |
| 5-40% | insbesondere 15-30% Polyamin |
| bis zu 25% | insbesondere 2-7% einer komplexbildenden Carbonsäure |
| bis zu 40% | insbesondere 4-6% eines fungizid wirksamen diffundierenden Anions |

2

| bis zu 75% | insbesondere 13-25% eines quartären Ammoniumsalzes |
| bis zu 30% | insbesondere 5-12% Salze des N-Cyclohexyldiazeniumdioxids |

wobei die Summe jeweils 100 (Gew.%) ergibt.

Gegebenenfalls können untergeordnete Mengen an anderen Bestandteilen, wie andere Amine, Ammoniak, Netzmittel, Wasserenthärtungsmittel (Nitriloessigsäure etc.) und erforderlichenfalls Wasser enthalten sein, dessen Anteil jedoch soweit wie möglich gering gehalten wird und im wesentlichen der Handhabung dient.

Die Erfindung erstreckt sich jedoch gleichermaßen auch auf die durch Verdünnung der Konzentrate mit Wasser herstellbaren Imprägnierlösungen, entsprechend den notwendigen Anwendungskonzentrationen, abhängig vom Imprägnierverfahren und Gefährdungsgrad des Holzes, beispielsweise Verdünnung auf 2 bis 6%, insbesondere 4% (bezogen auf das Konzentrat).

Die Herstellung der Konzentrate, die in Form von Pasten oder viskosen Lösungen (gegebenenfalls auch als Festsalz) vorliegen können, erfolgt am besten, indem Polyamin, gegebenenfalls zusammen mit Wasser, vorgelegt wird und darin zunächst die Carbonsäuren und gegebenenfalls die Salze mit fungiziden Anionen und/ oder Salze des N-Cyclohexyldiazeniumdioxids gelöst werden. Die Zinkverbindungen lösen sich dann in dieser Mischung unter Komplexbildung auf, durch Erwärmung auf 90-100°C wird der Lösevorgang beschleunigt. Die Alkalität der Konzentrate wird so eingestellt, daß einerseits ausreichend Polyamin und ggf. komplexbildende Carbonsäure vorhanden ist, um die Zinkverbindung zu lösen und andererseits durch Zugabe von z.B. weiteren Polyaminen, Amin oder Alkalihydroxid der pH-Wert der verdünnten Imprägnierlösungen im allgemeinen über pH 7,0 liegt, insbesondere bei 8,0 bis 9,0 (konzentrationsabhängig) liegt. Beim Imprägnieren dringt die Zinkverbindung gut in das Holz ein, wobei der größte Teil des Zinks (ca. 70 bis 95%) im Holz fixiert wird.

Auch andere Fungizide, wie z.B. Furmecyclox oder Benodanil, Tridemorph, Alkyldimethylamin ($C_{12}/C_{14}/C_{16}$) oder Insektizide, wie z.B. Lindan, können den Formulierungen zugegeben werden, sie sind ggf. unter Zusatz von Emulgatoren und Lösungsmitteln, z.B. ethoxilierte Nonylphenole, einzuarbeiten.

Die Anwendung zum Schutz des Holzes kann je nach Gefährdung des Holzes z.B. erfolgen :

a) durch Besprühen des Holzes mit der Lösung
b) durch Tauchen des Holzes in die Lösung
c) durch Tränkung des Holzes mit Hilfe von Druckunterschieden, z.B. Kesseldruck- oder Doppelvakuumtränkung
d) durch Streichen des Holzes.

Zur Prüfung der Stabilität wurden Konzentrate hergestellt und auf Anwendungskonzentration (z.B. Kesseldruckverfahren) mit Wasser verdünnt. Die Stabilität und das Aussehen der Lösungen wurden ermittelt. Die Lösungen verhindern die Zerstörung des Holzes durch Pilze in gleicher Weise wie bekannte Lösungen, die Kupfer statt Zink enthalten.

Bekannte Vergleichsbeispiele

Vergleich 1

| 30,00% | Ethanolamin |
| 36,00% | 2-Ethylhexansäure |
| 10,00% | Zinkoxid |
| 24,00% | $H_2O$ |

Trübes Konzentrat auch nach längerem Erhitzen auf ca. 100°C ;
Anwendungskonzentration 4% (bezogen auf das Konzentrat) :
trübe Lösung mit Ausfällungen

Vergleich 2

| 30,00% | Ethanolamin |
| 35,00% | 2-Ethylhexansäure |
| 4,00% | Milchsäure |
| 10,00% | Zinkoxid |
| 21,00% | Wasser |

Klares Konzentrat.
Anwendungskonzentration 4% :
trübe Lösung, Ausfällung

Erfindungsgemäße Beispiele

Beispiel 1

| 20,00% | Diethylentriamin |
| 35,00% | 2-Ethylhexansäure |
| 10,00% | Zinkoxid |
| 35,00% | $H_2O$ |

Klares Konzentrat
Anwendungskonzentration 4% :
klare Lösung, pH-Wert ca. 8,7

Beispiel 2

| 20,00% | Diethylentriamin |
| 34,00% | 2-Ethylhexansäure |
| 6,00% | Milchsäure |
| 10,00% | Zinkoxid |
| 15,00% | Dimethylalkylbenzylammoniumchlorid ($C_{12}/C_{14}$) |
| 15,00% | Wasser |

Klares Konzentrat
Anwendungskonzentration 4% :
klare Lösung, pH-Wert ca. 8,5

Beispiel 3

| 20,00% | Diethylentriamin |
| 34,00% | 2-Ethylhexansäure |
| 6,00% | Milchsäure |
| 10,00% | Zinkoxid |
| 9,00% | Kaliumsalz des N-Cyclohexyldiazeniumdioxids |
| 21,00% | Wasser |

Klares Konzentrat
Anwendungskonzentration 4% :
klare Lösung, pH-Wert ca. 8,6

Beispiel 4

| 26,50% | Aminoethylethanolamin |
| 34,00% | 2-Ethylhexansäure |
| 6,00% | Milchsäure |
| 10,00% | Zinkoxid |
| 15,00% | Dimethylalkylbenzylammoniumchlorid ($C_{12}/C_{14}$) |
| 8,50% | Wasser |

Klares Konzentrat
Anwendungskonzentration 4% :
klare Lösung pH-Wert ca. 8,0

Beispiel 5

| | |
|---|---|
| 28,50% | Aminoethylethanolamin |
| 35,00% | 2-Ethylhexansäure |
| 10,00% | Zinkoxid |
| 20,00% | Dimethylalkylbenzylammoniumchlorid ($C_{12}/C_{14}$) |
| 6,50% | Wasser |

Klares Konzentrat
Anwendungskonzentration 4% :
klare Lösung, pH-Wert ca. 8,5

Beispiel 6

| | |
|---|---|
| 25,00% | Aminoethylethanolamin |
| 31,00% | 2-Ethylhexansäure |
| 5,00% | Milchsäure |
| 9,00% | Zinkoxid |
| 9,00% | Kaliumsalz des N-Cyclohexyldiazeniumdioxids |
| 21,00% | Wasser |

Klares Konzentrat
Anwendungskonzentration 4% :
klare Lösung, pH-Wert ca. 8,5

Beispiel 7

| | |
|---|---|
| 25,00% | Dipropylentriamin |
| 35,00% | 2-Ethylhexansäure |
| 6,00% | Milchsäure |
| 10,00% | Zinkoxid |
| 5,00% | Borsäure |
| 19,00% | Wasser |

Klares Konzentrat
Anwendungskonzentration 4% :
klare Lösung, pH-Wert ca. 8,9

Beispiel 8

| | |
|---|---|
| 23,00% | Dipropylentriamin |
| 33,00% | 2-Ethylhexansäure |
| 3,00% | Milchsäure |
| 9,00% | Zinkoxid |
| 15,00% | Dimethylalkylbenzylammoniumchlorid |
| 17,00% | Wasser |

Klares Konzentrat
Anwendungskonzentration 4% :
klare Lösung, pH-Wert ca. 8,8

Beispiel 9

| | |
|---|---|
| 10,00% | Aminoethylethanolamin |
| 9,50% | Dipropylentriamin |
| 25,00% | 2-Ethylhexansäure |
| 4,50% | Milchsäure |
| 7,50% | Zinkoxid |

5,00%   Borsäure
7,50%   Kaliumsalz des N-Cyclohexyldiazeniumdioxids
31,00%  Wasser

Klares Konzentrat
Anwendungskonzentration 4% :
klare Lösung, pH-Wert ca. 8,8


**Patentansprüche**

1. Holzschutzmittel, das keine Kupferverbindung enthält, auf der Basis einer Zinkverbindung, außer Zink-silicofluorid, ZnSiF$_6$, und einer aliphatischen Carbonsäure, die mit Zink ein wasserunlösliches Salz bildet, dadurch gekennzeichnet, daß das Mittel zusätzlich ein Polyamin enthält.

2. Mittel nach Anspruch 1, dadurch gekennzeichnet, daß die Carbonsäure 2-Ethylhexansäure ist.

3. Mittel nach Anspruch 1, dadurch gekennzeichnet, daß die Zinkverbindung Zinkhydroxid oder Zinkcarbonat ist.

4. Mittel nach Anspruch 1, dadurch gekennzeichnet, daß es zusätzlich eine komplexbildende Carbonsäure enthält.

5. Verfahren zum Schutz von Holz, dadurch gekennzeichnet, daß man das Holz mit einer Imprägnierlösung behandelt, die durch Verdünnen mit Wasser aus einem Holzschutzmittel gemäß Anspruch 1 hergestellt worden ist.

6. Mittel nach Anspruch 1, dadurch gekennzeichnet, daß es zusätzlich ein Alkalisalz oder ein Zinksalz des N-Cyclohexyldioxydiazeniumoxids enthält.

7. Mittel nach Anspruch 1, dadurch gekennzeichnet, daß es zusätzlich eine quartäre Ammoniumverbindung enthält.

8. Mittel nach Anspruch 1, dadurch gekennzeichnet, daß das Polyamin 3,3'-Diaminodipropylamin ist.

9. Mittel nach Anspruch 1, dadurch gekennzeichnet, daß es zusätzlich Milchsäure enthält.

10. Imprägnierlösung zum Schutz von Holz, dadurch gekennzeichnet, daß sie durch Verdünnen mit Wasser aus einem Holzschutzmittel gemäß Anspruch 1 hergestellt worden ist.


**Claims**

1. A wood preservative which does not contain a copper compound and is based on a zinc compound, with the exception of zinc silicofluoride, ZnSiF$_6$, and an aliphatic carboxylic acid which forms a water-insoluble salt with zinc, wherein the preservative additionally contains a polyamine.

2. A preservative as claimed in claim 1, wherein the carboxylic acid is 2-ethylhexanoic acid.

3. A preservative as claimed in claim 1, wherein the zinc compound is zinc hydroxide or zinc carbonate.

4. A preservative as claimed in claim 1, which additionally contains a complex-forming carboxylic acid.

5. A process for preserving wood, wherein the wood is treated with an impregnating solution which has been prepared from a wood preservative as claimed in claim 1 by dilution with water.

6. A preservative as claimed in claim 1, which additionally contains an alkali metal salt or a zinc salt of N-cyclohexyldioxydiazenium oxide.

7. A preservative as claimed in claim 1, which additionally contains a quaternary ammonium compound.

8. A preservative am claimed in claim 1, wherein the polyamine is 3,3'-diaminodipropylamine.

9. A preservative am claimed in claim 1, which additionally contains lactic acid.

10. An impregnating solution for preserving wood, wherein said solution has been prepared from a wood preservative as claimed in claim 1 by dilution with water.


**Revendications**

1. Produit pour la protection des bois, exempt de composé du cuivre, à base d'un composé du zinc, hormis la fluosilicate de zinc ZnSiF$_6$, et d'un acide carboxylique aliphatique donnant avec le zinc un sel insoluble dans l'eau, caractérisé en ce qu'il contient en outre une polyamine.

2. Produit selon la revendication 1, caractérisé en ce que l'acide carboxylique est l'acide 2-éthylhexanoïque.

3. Produit selon la revendication 1, caractérisé en ce que le composé du zinc est l'hydroxyde de zinc ou le carbonate de zinc.

4. Produit selon la revendication 1, caractérisé en ce qu'il contient en outre un acide carboxylique complexant.

5. Procédé pour protéger les bois, caractérisé en ce qu'on les traite par une solution d'imprégnation qui a été préparée par dilution avec de l'eau à partir d'un produit pour la protection des bois selon la revendication 1.

6. Produit selon la revendication 1, caractérisé en ce qu'il contient en outre un sel alcalin ou un sel de zinc de l'oxyde de N-cyclohexyldioxydiazénium.

7. Produit selon la revendication 1, caractérisé en ce qu'il contient en outre un composé d'ammonium quaternaire.

8. Produit selon la revendication 1, caractérisé en ce que la polyamine est la 3,3'-diaminodipropylamine.

9. Produit selon la revendication 1, caractérisé en ce qu'il contient en outre de l'acide lactique.

10. Solution d'imprégnation pour la protection des bois, caractérisée en ce qu'elle a été préparée par dilution à l'eau à partir d'un produit pour la protection des bois selon la revendication 1.